# EUROPÄISCHE PATENTANMELDUNG

(11) **EP 3 632 874 A1**
(43) Veröffentlichungstag der Anmeldung: **08.04.2020**
(21) Anmeldenummer: 19197998.8
(22) Anmeldetag: 18.09.2019
(51) Int. Cl.: C04B 28/02, C04B 28/04, C04B 40/00, C04B 111/20, C04B 111/60

(54) **ENTWÄSSERNDER UND SCHALLABSORBIERENDER HOCHLEISTUNGSBETON**

(30) Priorität: 04.10.2018 AT 508522018
(71) Anmelder: Staretschek, Rainer, 4204 Reichenau (AT)
(72) Erfinder: Staretschek, Rainer, 4204 Reichenau (AT)
(74) Vertreter: Hübscher & Partner Patentanwälte GmbH

(57) **Zusammenfassung**

Die Erfindung bezieht sich auf einen entwässernden und schallabsorbierenden Hochleistungsbeton aus Zement, Wasser und Großkornadditiven mit einer Korngröße von 2mm bis 32mm, insbesondere für Beläge im Straßen- und Wegebau, für drainagefähige Pflastersteine und Platten. Um eine Betonrezeptur zu verbessern, wird vorgeschlagen, dass je m³ Beton maximal 99L Wasser, maximal 279kg Zement und zwischen 10 und 100kg einer kleinkörnigen Compoundmischung beigemischt sind, wobei die Compoundmischung aus 5 bis 50Gew% Mikrosilika mit einer minimalen Korngröße von 0,005µm und mit einer maximalen Korngröße von 20µm, aus 5 bis 50Gew% Quarzmehl einer ersten Mischung mit einer minimalen Korngröße von 0,01µm und mit einer maximalen Korngröße von 50µm und aus 5 bis 95Gew% Quarzmehl einer zweiten Mischung mit einer minimalen Korngröße von 0,1 µm und mit einer maximalen Korngröße von 200µm besteht.

## Beschreibung

Die Erfindung bezieht sich auf einen entwässernden und schallabsorbierenden Hochleistungsbeton aus Zement, Wasser und Großkornadditiven mit einer Korngröße von 2mm bis 32mm, sowie auf ein Herstellungsverfahren und die Verwendung des entwässernden Hochleistungsbetons.

Als Folge der Entwicklungsfortschritte erweitern sich das Einsatzspektrum des bereits schon lange bekannten Baustoffes Beton, sowie die an ihn gestellten Ansprüche fortwährend. Aus ingenieurwissenschaftlicher Sicht ist es beispielsweise von großer Interesse durch Optimierung von Mischrezepturen und Beimengen diverser Zusatzstoffe die Festigkeit von Beton zu optimieren. In der AT516171 B1 wird die Rezeptur eines solchen ultrafesten Hochleistungsbetons beschrieben, wobei neben üblichen Komponenten wie Wasser und Zement, kleinkörnigen Feinanteilen, wie zum Beispiel Mikrosilika und Quarzmehl zum Einsatz kommen. So können extrem hohe Druckfestigkeiten erreicht werden. Aufgrund der dichtegepackten Struktur und der damit eingehenden fehlenden Wasserpermeabilität muss allerdings eingeräumt werden, dass ein Einsatz von solchen Rezepturmischungen im Straßenbau möglich ist, diese aber nicht wasserdurchlässig sind. Ein gattungsgemäßer Hochleistungstraßenbelag mit wasserdurchlässiger Eigenschaft und mit Schallschluckvermögen ist beispielsweise aus der EP2489647A1 bekannt.

Neben dem technischen Zweck steht vor allem die Nachhaltigkeit im Fokus der Entwicklungen. So ist die Bauindustrie angehalten, betreffende Materialien so auszugestalten, dass vom Mensch erbaute Infrastruktur sich nicht invasiv auf das jeweilige ökologische Umfeld auswirkt. In der EP2489647A1 wird durch den Einsatz von grobkörnigen Siliziumdioxid oder Porphyr-Aggregaten in einem Straßenbelag ein Abfließen von Wasser durch den Beton in den Boden begünstigt. Dadurch bleibt der natürliche ökologische Wasserkreislauf erhalten.

Im Gegensatz zum eingangs erwähnten Hochleistungsbeton ist die Robustheit gegenüber Abnützungen durch Reibung oder Säure allerdings wesentlich geringer, was häufige Wartungsarbeiten zur Folge hat.

Der Erfindung liegt somit die Aufgabe zugrunde, eine Betonrezeptur für einen entwässernden, insbesondere drainagefähigen, und schallabsorbierenden Hochleistungsbeton dahingehend zu verbessern, dass, trotz Aufrechterhaltung der ökonomischen Rentabilität, kein Kompromiss bezüglich des Einsatzgebiets des Betons eingegangen werden muss, indem die Betonrezeptur Eigenschaften vereint, die den Festigkeitsanforderungen im Tiefbau gerecht werden, ohne Einbußen von ökologischen und sicherheitstechnischen Aspekten hinnehmen zu müssen.

Die Erfindung löst die gestellte Aufgabe mit einem entwässernden und schallabsorbierenden Hochleistungsbeton bestehend aus Zement, Wasser und Großkornadditiven mit einer Korngröße von 2mm bis 32mm dadurch, dass je m³ Beton maximal 99L Wasser, maximal 279kg Zement und zwischen 10 und 100kg einer kleinkörnigen Compoundmischung beigemischt sind, wobei die Compoundmischung aus 5 bis 50Gew% Mikrosilika mit einer minimalen Korngröße von 0,005µm und mit einer maximalen Korngröße von 20µm, aus 5 bis 50Gew% Quarzmehl einer ersten Mischung mit einer minimalen Korngröße von 0,01 µm und mit einer maximalen Korngröße von 50µm und aus 5 bis 95Gew% Quarzmehl einer zweiten Mischung mit einer minimalen Korngröße von 0,1µm und mit einer maximalen Korngröße von 200µm besteht.

Durch diese Rezeptur kann im Vergleich zu bisher bekannten Betonarten ein wesentlich ressourcenschonender Anmischprozess erreicht werden. Das Problem von entwässernden Beton nach bisherigem Stand der Technik liegt in der geringeren Widerstands- und Belastungsfähigkeit bei mechanischer Beanspruchung, oder anderen Umwelteinflüssen gegenüber. Um die Festigkeit und Robustheit zu erhöhen, wird üblicherweise Zement in hohen Mengen beigemischt, was hohen Transport und Lageraufwand zur Folge hat. Durch den Einsatz einer kleinkörnigen Compoundmischung, deren Massenteil deutlich unter dem üblichen Anteil von Zement bisher bekannter Rezepturen liegt, kann der oben erwähnte Aufwand durch die zusätzliche Klebewirkung deutlich reduziert werden. Der geringere Zementanteil verringert zudem die benötigte Wassermenge, wodurch die Betonmischung nach Auftragung wesentlich schneller trocknet und beispielsweise eine rasche Benützung der aufgetragenen Straße ermöglicht.

Bekannte Hochleistungsbetonsorten weisen, bedingt durch einen hohen Anteil von Feinkornkomponenten, ein geringes Lückenvolumen auf, was in einer geringen Fluidpermeabilität resultiert. Überraschenderweise hat sich genau durch den Einsatz einer für den Hochleistungsbeton entwickelten Compoundmischung, die aus 5 bis 50Gew% Mikrosilika mit einer minimalen Korngröße von 0,005µm und mit einer maximalen Korngröße von 20µm, aus 5 bis 50Gew% Quarzmehl einer ersten Mischung mit einer minimalen Korngröße von 0,01 µm und mit einer maximalen Korngröße von 50µm und aus 5 bis 95Gew% Quarzmehl einer zweiten Mischung mit einer minimalen Korngröße von 0,1µm und mit einer maximalen Korngröße von 200µm besteht, Gegenteiliges herausgestellt. Durch die hohen Kohäsionskräfte der Compoundmischung wird wesentlich weniger Zement und Wasser zum Anmischen benötigt. Die dadurch erreichte Viskosität der Klebemischung reicht aus um noch vor der Aushärtung die Großkornadditive vollständig zu benetzen, aber nicht um das Lückenvolumen zwischen den Großkornadditiven zu füllen, sodass ein poröser, hochfester Werkstoff trotz des Feinkornanteils entsteht. Besonders vorteilhaft lässt sich dieser Effekt im Straßenbau nützen, wodurch bei heftigen Regenfällen die Gefahr von auftretendem Aquaplaning durch die wasserdurchlässige Struktur verringert wird.

Um die Wasserdurchlässigkeit des Betons beeinflussen zu können wird vorgeschlagen, dass der Betonmischung zwischen 1 und 4Gew% eines ersten Fließmittels, insbesondere auf Basis von Polycarboxylatether oder/und dessen Derivate, und zwischen 1 und 2Gew% eines zweiten Fließmittels, insbesondere auf Basis von Acrylpolymeren beigemischt sind. Auf diese Weise kann die anfängliche Viskosität der Mischung verringert werden, wodurch ein größerer Teil des Lückenvolumens der Großkornadditive vor Aushärten der Betonmischung ausgefüllt werden kann. Dies ist im Straßen- und Wegbau insbesondere aus ökologischer Sicht dann gewünscht, wenn der Hochleistungsbeton nicht nur eine wasserdurchlässige Wirkung haben soll, sondern auch eine filternde Wirkung. Durch eine ausreichend hohe Filterzeit können so Verunreinigungen aus etwaigem Regenwasser entfernt werden. Naturgemäß kann zur Erhöhung der Fließfähigkeit auch ausschließlich ein Fließmittel allein eingesetzt werden, die Kombination mit einem zweiten Fließmittel stellt sich jedoch als besonders vorteilhaft heraus.

Vor allem im Hochbau ist eine gewisse Duktilität des Betons gefordert. Damit der entwässernde und schallabsorbierende Hochleistungsbeton auch diesen Ansprüchen gerecht werden kann, empfiehlt es sich, dass je m³ Beton bis zu 10kg Fasern beigemischt sind. Es versteht sich von selbst, dass der diesbezüglichen Materialauswahl keine Grenzen gesetzt sind, sowohl Stahlfasern als auch Werkstoffe auf Polymerbasis sind denkbar.

Gegebenenfalls müssen verwendete Betonmischungen zur Wahrung des Ortsbildes farblich ausgestaltet werden, hierzu wird vorgeschlagen, dass dem entwässernden Hochleistungsbeton Farbpigmente zugefügt sind. Dies ermöglicht eine ästhetische Anpassung des Materials, ohne seine Eigenschaften auf negative Weise zu beeinflussen.

Um eine Herstellung des entwässernden Hochleistungsbetons in handelsüblichen Mischmaschinen zu gewährleisten, wird empfohlen, dass eine Basismischung bestehend aus Zement, Wasser, Compoundmischung und gegebenenfalls Fließmittel solange gemischt wird, bis sich eine homogene, flüssige Masse ergibt und erst danach die Großkornadditive beigemischt werden. In einfach aufgebauten Mischmaschinen kann so die Basismischung auf die gewünschte Viskosität eingestellt werden, erst durch Hinzugeben der Großkornadditive wird der für das Lückenvolumen essentielle Benetzungsvorgang eingeleitet, der schlussendlich die Wasserdurchlässigkeit des Betons bestimmt.

Ein besonderer Fokus bezüglich des Einsatzgebiets der erfindungsgemäßen Betonrezeptur soll auf den Straßenbau gelegt werden. Um ein ressourcenschonendes Straßenbaukonzept zu etablieren, ist es daher nützlich, dass zuerst eine Tragschicht, gefolgt von einer maximal 10cm hoch geschütteten Kantkornmischung mit einer minimalen Korngröße von 2mm und einer maximalen Korngröße von 16mm aufgetragen wird, bevor der entwässernde und schallabsorbierende Hochleistungsbeton beaufschlagt wird. Die Dicke der Tragschicht und des entwässernden Hochleistungsbetons kann abhängig von erwarteten Belastungsspitzen variiert werden, wobei die dazwischen aufgetragene Kantkornmischung als wasserführende Schicht fungiert.

In der Zeichnung ist der Erfindungsgegenstand beispielsweise dargestellt. Es zeigen
- Fig. 1: einen schematischen Schnitt des getrockneten entwässernden und schallabsorbierenden Hochleistungsbetons.
- Fig. 2: einen schematischen Schnitt des getrockneten entwässernden und schallabsorbierenden Hochleistungsbetons mit beigemischtem Fließmittel.
- Fig. 3: schematische Aufschichtung empfohlener Komponenten im Straßenbau.

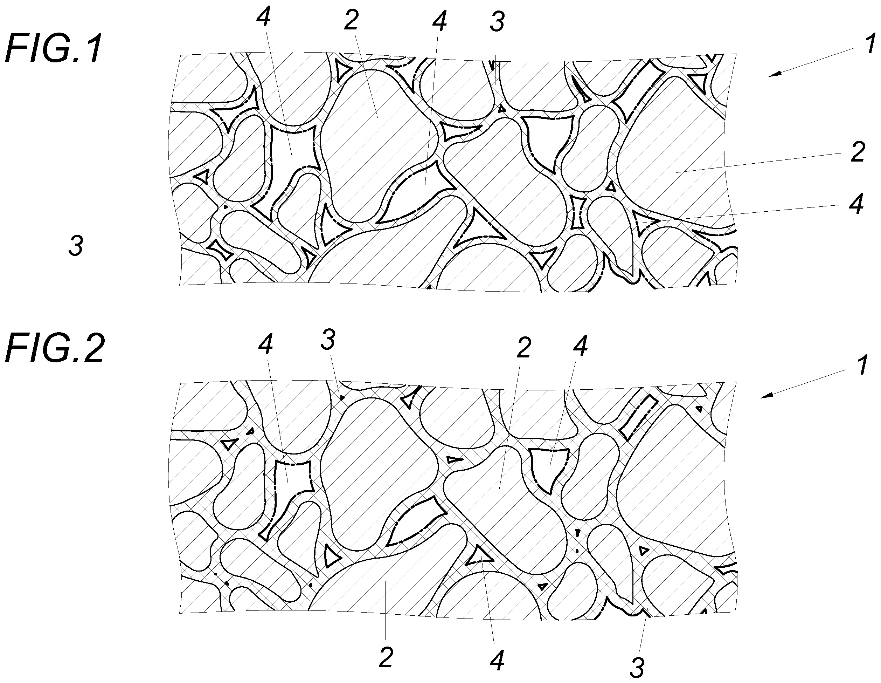

Der in der Fig. 1 gezeigte entwässernde und schallabsorbierende Hochleistungsbeton 1 besteht aus Großkornadditive 2 und einer Klebemischung 3 zusammengesetzt aus Zement, Wasser und einer Compoundmischung. Durch Einbringen der Compoundmischung kann die Festigkeit auch bei geringerem Zementanteil erhöht werden. Da der Anteil der benötigten Compoundmischung den Zementanteil bekannter Betonmischungen unterschreitet, kann der Transport- und Lageraufwand wesentlich verringert werden. Durch die geringe für das Anmischen benötigte Wassermenge wird außerdem die Aushärtezeit des entwässernden Hochleistungsbetons 1 reduziert.

Die Verwendung der Klebemischung 3 führt auf Grund der speziellen feinkörnigen Konstitution überraschenderweise zu einer vollständigen Benetzung der Großkornadditive 2, jedoch zu keiner Schließung des entstandenen Lückenvolumens 4. Je größer das Lückenvolumen 4 ist, desto höher ist die Permeabilität des Betons diverser Fluide, vorzugsweise Wasser, gegenüber.

Der in der Fig. 2 gezeigten Klebemischung 3 ist ein Fließmittel beigemischt, wodurch sich die Viskosität der Klebemischung 3 erniedrigt. Aufgrund der erhöhten Fließfähigkeit füllt die Klebemischung 3 einen verhältnismäßig größeren Teil des Lückenvolumen 4 aus, bevor der Kleber ausgehärtet ist. Auf diese Weise ist es möglich durch Zudosierung eines oder mehrerer Fließmittel, wie zum Beispiel Polycarboxylatether (1 bis 4Gew%) und/oder Acrylpolymere (1 bis 2Gew%), direkten Einfluss auf die entwässernde Wirkung des Hochleistungsbetons 1 zu nehmen, was den Einsatz bei unterschiedliche Aufgabenstellungen ermöglicht. So kann sich ein Hochleistungsbeton 1 eingesetzt bei dichtbefahrene Straßen, mit der Hauptaufgabe einer hohen Robustheit und Wasserpermeabilität um Aquaplaning zu verhindern, allein durch das Lückenvolumen von einem Hochleistungsbeton 1 eingesetzt für Pflastersteine oder Bodenbeläge unterscheiden, die gegebenenfalls eine schwächer ausgeprägte Drainagefähigkeit aufweisen sollen.

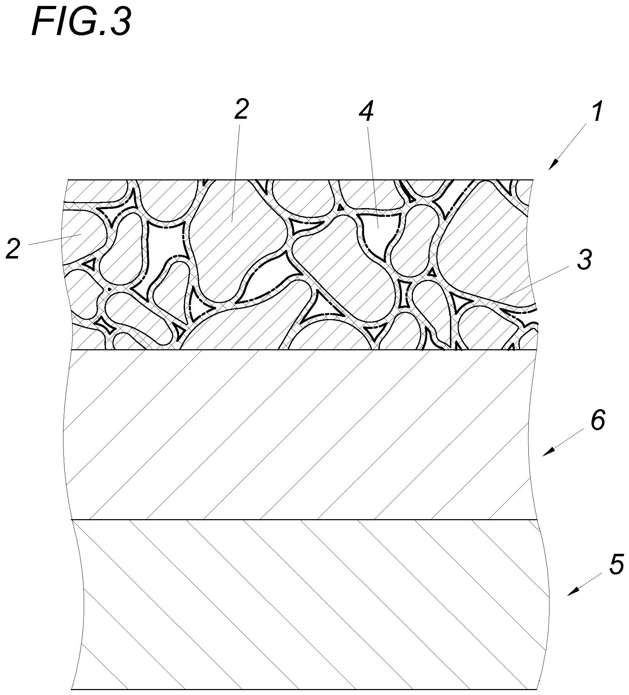

In Fig. 3 wird der schematische Aufbau von im Straßenbau verwendeten Materialien gezeigt. Fundament bildet die Tragschicht 5, deren Dicke und Zusammensetzung von den jeweiligen Belastungsspitzen abhängen. Zwischen dem entwässernden Hochleistungsbeton 1 und der Tragschicht 5 ist eine Kantkornmischung 6 geschichtet, die eine Korngröße zwischen 2mm und 16mm und dadurch eine hervorragende Wasserpermeabilität aufweist. Unter der Tragschicht können Filtersubstrate mit hohem Carbonatgehalt verbaut sein, was eine Nitrifikation von eingeschwämmten Stickstoffverbindungen und eine Fixierung von Metallen bewirken kann.

### Ausführungsbeispiel:

Es hat sich als besonders vorteilhaft erwiesen, wenn die eingesetzte Compoundmischung aus 5 bis 50Gew% Mikrosilika mit einer minimalen Korngröße von 0,01 µm und mit einer maximalen Korngröße von 6µm, aus 5 bis 50Gew% Quarzmehl einer ersten Mischung mit einer minimalen Korngröße von 0,1µm und mit einer maximalen Korngröße von 30µm und aus 5 bis 95Gew% Quarzmehl einer zweiten Mischung mit einer minimalen Korngröße von 0,5µm und mit einer maximalen Korngröße von 60µm besteht. Als Zement können handelsübliche Zementarten eingesetzt werden, wobei sich die Arten CEM I und CEM II der Festigkeitsklassen 42,5 und 52,5 als besonders vorteilhaft herausgestellt haben.

Aus der im Ausführungsbeispiel offenbarten Mischung ergibt sich bei einer Körnung der Großkornadditive zwischen 2 und 8mm eine Porosität von 20 bis 40%, wodurch ein Durchlässigkeitsbeiwert zwischen 0,003 und 1 m/s erzielt wird. Die Druckfestigkeit des erfindungsgemäßen Hochleistungsbetons liegt bei über 30N/mm².

## Patentansprüche

1. Entwässernder und schallabsorbierender Hochleistungsbeton (1) bestehend aus Zement, Wasser und Großkornadditiven (2) mit einer Korngröße von 2mm bis 32mm, **gekennzeichnet dadurch, dass** je m³ Beton maximal 99L Wasser, maximal 279kg Zement und zwischen 10 und 100kg einer kleinkörnigen Compoundmischung beigemischt sind, wobei die Compoundmischung aus 5 bis 50Gew% Mikrosilika mit einer minimalen Korngröße von 0,005µm und mit einer maximalen Korngröße von 20µm, aus 5 bis 50Gew% Quarzmehl einer ersten Mischung mit einer minimalen Korngröße von 0,01 µm und mit einer maximalen Korngröße von 50µm und aus 5 bis 95Gew% Quarzmehl einer zweiten Mischung mit einer minimalen Korngröße von 0,1µm und mit einer maximalen Korngröße von 200µm besteht.

2. Entwässernder und schallabsorbierender Hochleistungsbeton (1) nach Anspruch 1, **dadurch gekennzeichnet, dass** zwischen 1 und 4Gew% eines ersten Fließmittels, insbesondere auf Basis von Polycarboxylatether oder/und dessen Derivate, und zwischen 1 und 2Gew% eines zweiten Fließmittels, insbesondere auf Basis von Acrylpolymeren beigemischt sind.

3. Entwässernder und schallabsorbierender Hochleistungsbeton (1) nach Anspruch 1 oder 2, **dadurch gekennzeichnet, dass** je m³ Beton bis zu 10kg Fasern beigemischt sind.

4. Entwässernder und schallabsorbierender Hochleistungsbeton (1) nach einem der Ansprüche 1 bis 3, **dadurch gekennzeichnet, dass** Farbpigmente zugefügt sind.

5. Verfahren zur Erzeugung eines entwässernden und schallabsorbierenden Hochleistungsbetons (1) nach einem der Ansprüche 1 bis 4, **dadurch gekennzeichnet, dass** eine Basismischung bestehend aus Zement, Wasser, Compoundmischung und gegebenenfalls Fließmittel solange gemischt wird, bis sich eine homogene, zähflüssige Masse ergibt und erst danach die Großkornadditive (1) beigemischt werden.

6. Verfahren zur Herstellung eines Straßenaufbaus mit einem entwässernden und schallabsorbierenden Hochleistungsbeton (1) nach einem der Ansprüche 1 bis 5, **dadurch gekennzeichnet, dass** zuerst eine Tragschicht (5), gefolgt von einer maximal 10cm hoch geschütteten Kantkornmischung mit einer minimalen Korngröße von 2mm und einer maximalen Korngröße von 16mm aufgetragen wird, bevor der entwässernde und schallabsorbierende Hochleistungsbeton (1) auf die Kantkornmischung aufgetragen wird.

7. Verwendung eines entwässernden und schallabsorbierenden Hochleistungsbetons (1) nach einem der Ansprüche 1 bis 4 zur Herstellung von drainagefähigen Bodenbelägen, Pflastersteinen oder Platten.
